# DEMANDE DE BREVET EUROPEEN

(11) **EP 0 875 277 A1**
(43) Date de publication de la demande: **04.11.1998**
(21) Numéro de dépôt: 98400880.5
(22) Date de dépôt: 09.04.1998
(51) Int. Cl.: B01D 53/02

(54) **Système de traitement d'air comprimé à usage médical**

(30) Priorité: 29.04.1997 FR 9705281
(71) Demandeur: AIR LIQUIDE SANTE DEVELOPPEMENT, 75007 Paris (FR)
(72) Inventeur: D'Armancourt, Benoît, 92190 Meudon (FR); Millet, Cyrille, 75014 Paris (FR); Bourgeois, Philippe, 75017 Paris (FR)
(74) Mandataire: Conan, Philippe Claude

(57) **Abrégé**

Procédé et installation de préparation d'air médical à partir d'air atmosphérique comportant au moins les étapes de :
a) compression de l'air atmosphérique à une pression supérieure à la pression atmosphérique,
b) purification de l'air comprimé en l'une au moins des impuretés qu'il contient, par introduction dudit air comprimé dans une zone d'épuration comprenant au moins un adsorbeur contenant au moins un matériau adsorbant et au moins un catalyseur d'oxydation,
c) régénération dudit au moins un adsorbeur, caractérisé en ce que le matériau adsorbant est de type alumine activée et le catalyseur d'oxydation est de type hopcalite.

## Description

La présente invention concerne un procédé de préparation d'air de qualité médicale à partir d'un flux d'air atmosphérique.

L'air de qualité médicale, plus communément appelé "air médical", trouve des applications variées en milieu hospitalier, où il peut être utilisé non seulement en tant que gaz d'assistance respiratoire, par exemple dans les blocs opératoires ou les salles de réanimation, mais aussi en tant que source d'énergie pneumatique pour des appareils pneumatiques mis en oeuvre dans notamment les blocs opératoires, ou encore dans la pressurisation des caissons hyperbares.

Habituellement, l'air médical est préparé à partir d'air atmosphérique, lequel air atmosphérique doit subir des étapes de traitement et de purification afin d'en éliminer la majeure partie des polluants qui s'y trouvent, à savoir notamment les particules en suspension (poussières, bactéries...), la vapeur d'eau, le dioxyde de carbone (CO₂), le monoxyde de carbone (CO), les oxydes d'azote (NOₓ) et le dioxyde de soufre (SO₂).

Plus précisément, les teneurs maximales admissibles de l'air médical en ses différents polluants sont données par la norme NFS 90-140 et sont résumées dans le Tableau I ci-après.

**TABLEAU I**

| **POLLUANT** | **TENEUR** |
|---|---|
| H₂O | < 0,09 g/m³ |
| CO₂ | < 350 ppm |
| CO | < 5 ppm |
| SO₂ | < 16 ppb |
| NO + NO₂ | < 25,5 ppb |
| Particules en suspension | 0,5 µg/Nm³ |
| ppm: partie par million en volume, | |
| ppb: partie par milliard en volume. | |

Dans le cadre de la présente invention on entend par air de qualité médicale ou air médical, de l'air ayant été purifié et ayant des teneurs en impureté conformes aux spécifications données dans le Tableau I précédent.

Plusieurs procédés permettant de préparer de l'air purifié ont déjà été décrits dans l'art antérieur.

De façon connu, de l'air atmosphérique est prélevé directement dans l'atmosphère, comprimé à l'aide d'un compresseur, puis soumis à une phase d'épuration par séchage et adsorption de tout ou partie des impuretés qu'il contient.

L'air purifié ainsi obtenu est ensuite envoyé vers une capacité de stockage ou, le cas échéant, vers un ou plusieurs sites utilisateurs, tel un réseau de canalisation de gaz en milieu hospitalier.

Les particules en suspension, tels la poussière et les bactéries, sont classiquement arrêtées aux moyens de filtres.

A titre d'exemple, on peut citer le document US-A-4,983,190 décrivant un procédé destiné à éliminer des agents biologiques ou chimiques de l'air, lequel procédé comprend les étapes de compression de l'air à une pression supérieure à la pression atmosphérique, de purification de l'air comprimé par adsorption avec variation de pression mettant en oeuvre un lit d'un adsorbant pouvant être régénéré, tel un tamis moléculaire zéolitique de type 13X, et de filtration de l'air purifié au moyen d'un filtre mécanique.

Ce document rappelle en outre que dans les systèmes d'épuration par adsorption avec variation de la pression, si l'adsorption et la désorption sont importantes pour les performances globales du système, le choix de l'adsorbant mis en oeuvre dans le procédé est quant à lui crucial.

En effet, l'adsorbant doit non seulement être capable d'adsorber le ou les impuretés contenues dans le flux d'air à épurer pendant l'étape de purification de l'air, mais aussi être apte à désorber, c'est-à-dire à libérer, les impuretés pendant la phase subséquente de régénération.

Or, lorsque l'on utilise un matériau adsorbant de type zéolitique, tel une zéolite 13X, pour épurer de l'air atmosphérique, on constate que l'air n'est que partiellement épuré. En effet, si la zéolite se montre particulièrement efficace pour piéger les impuretés de type dioxyde de carbone (CO₂) ou la vapeur d'eau, il n'en va pas de même en ce qui concerne les autres impuretés, en particulier, le monoxyde d'azote (NO) et le monoxyde de carbone (CO).

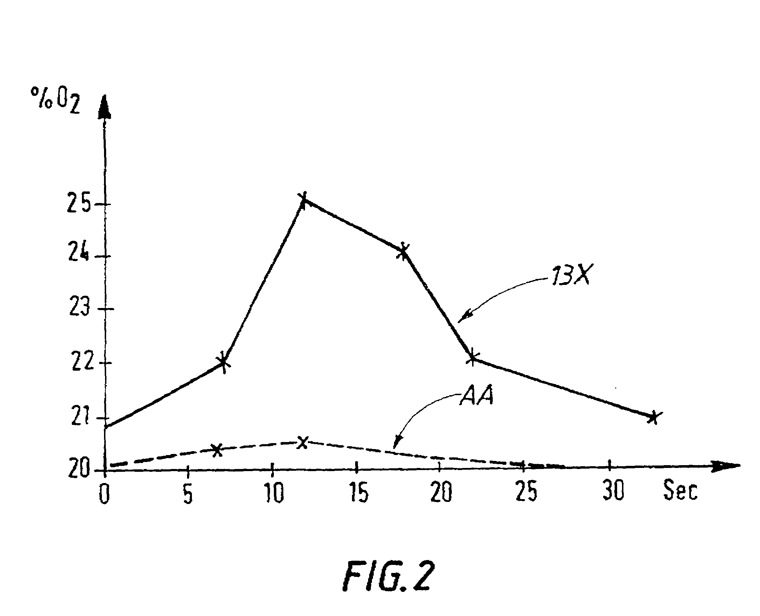

Par ailleurs, il est connu que les zéolites présentent de fortes capacités d'adsorption en dioxyde de carbone (CO₂) et en azote: 82 Ncc/g de CO₂ et 35 Ncc/g d'azote, respectivement, à une pression de 6.10⁵ Pa et à une température de 18°C. De là, et du fait de la sélectivité préférentielle des zéolites pour l'azote par rapport à l'oxygène, on assiste au début de chaque étape de purification, suivant une étape de régénération, à une production d'air médical à forte teneur en oxygène, c'est-à-dire pouvant contenir jusqu'à 28% d'oxygène. Or, de telles teneurs en oxygène ne sont pas acceptables dans de l'air destiné à un usage médical car elles peuvent nuire à la santé du patient. Ce phénomène est représenté sur la figure 2 ci-après.

En parallèle, lorsqu'on utilise un adsorbant de type zéolitique, il a été observé qu'il se produisait de très fortes variations de température au sein du ou des lits d'adsorbant, lors du passage d'une étape d'épuration à une étape de régénération successive, lesquelles sont liées aux variations de pression ayant lieu dans les adsorbeurs. De telles variations de température diminuent fortement le rendement de la purification.

Par ailleurs, l'air médical est, par essence même, destiné à être administré aux voies respiratoires d'un patient. Or, pendant l'étape de compression de l'air atmosphérique, préalablement à son épuration, on assiste classiquement à une contamination dudit air par des gouttelettes d'huile issues du compresseur, ce qui implique que l'air comprimé doit être non seulement épuré en ses impuretés susmentionnées mais aussi débarrassé de toute odeur désagréable d'huile afin d'être utilisable à des fins médicales: le seuil maximal, de concentration en huile admissible pour un patient étant de l'ordre de 0,2 mg/Nm³.

Le but de la présente invention est donc de fournir un procédé de préparation d'air médical à partir d'air atmosphérique:
- qui permette d'obtenir de l'air de qualité médicale répondant aux exigences de la norme NFS 90-140 et qui soit sensiblement exempt de toute odeur d'huile;
- qui permette de produire de l'air médical avec une teneur en oxygène comprise dans la gamme 18% à 24%, de préférence dans la gamme 20 à 23% et, préférentiellement, encore aux alentours de 20,9%;
- qui soit de rendement supérieur à ceux des procédés classiques.

La présente invention concerne alors un procédé de préparation d'air médical à partir d'air atmosphérique comportant au moins les étapes de :
a) compression de l'air atmosphérique à une pression supérieure à la pression atmosphérique,
b) purification de l'air comprimé en l'une au moins des impuretés qu'il contient, par introduction dudit air comprimé dans une zone d'épuration comprenant au moins un adsorbeur contenant au moins un matériau adsorbant et au moins un catalyseur d'oxydation,
c) régénération dudit au moins un adsorbeur,
caractérisé en ce que le matériau adsorbant est de type alumine activée et le catalyseur d'oxydation est de type hopcalite.

Le procédé de l'invention pourra également comprendre l'une ou plusieurs des caractéristiques suivantes:
- un lit d'hopcalite est inséré au sein d'un lit d'alumine activée;
- le lit d'hopcalite est inséré dans la deuxième moitié du lit d'alumine activée, de préférence dans le dernier tiers. On entend par première moitié du lit d'alumine activée, la portion du lit d'adsorbant située du côté de l'entrée de l'adsorbeur, c'est-à-dire de l'extrémité de l'adsorbeur où l'air comprimé à purifier est introduit dans celui-ci. A l'inverse, la seconde moitié du lit d'alumine activée, est la portion de lit d'adsorbant située du côté de la sortie de l'adsorbeur. Les première et seconde moitiés sont d'épaisseurs sensiblement égales et leur réunion forme le lit d'adsorbant;
- le rapport de l'épaisseur du lit d'hopcalite à l'épaisseur du lit d'alumine activée est compris dans la gamme 1:3 à 1:70, de préférence, dans la gamme 1:6 à 1:50;
- les particules d'hopcalite ou d'alumine activée ont un diamètre moyen compris dans la gamme 0,5 à 4 mm, de préférence 1 à 2,5 mm;
- la purification de l'air est effectuée à une pression comprise entre 3.10⁵ Pa et 15.10⁵ Pa, de préférence entre 8.10⁵ Pa et 13.10⁵ Pa;
- le rapport du poids d'alumine activée au poids d'hopcalite est compris dans la gamme 2,5:1 à 60:1, de préférence dans la gamme 10:1 à 30:1;
- la zone d'épuration comprend deux adsorbeurs contenant chacun au moins un lit d'un matériau adsorbant et au moins un lit d'un catalyseur d'oxydation;
- l'un desdits adsorbeurs est en phase d'épuration, pendant que l'autre adsorbeur est en phase de régénération;
- l'air médical produit est récupéré et délivré à au moins un site utilisateur ou à une capacité de stockage situés à l'intérieur ou à l'extérieur d'un bâtiment hospitalier.

La présente invention concerne également une installation de préparation d'air médical pour la mise en oeuvre du procédé précédemment décrit, comprenant:
- des moyens de compression d'air délivrant de l'air atmosphérique à une pression supérieure à la pression atmosphérique;
- des moyens d'épuration de l'air comprimé comportant au moins deux adsorbeurs contenant chacun au moins un lit d'un matériau adsorbant et au moins un lit d'un catalyseur d'oxydation;
- des moyens de stockage contenant de l'air médical et reliés à un ou plusieurs sites utilisateur.

L'invention va maintenant être décrite plus en détail à l'aide d'exemples et en référence aux figures annexées, donnés à titre indicatif, mais nullement limitatif de l'invention.

### Exemples:

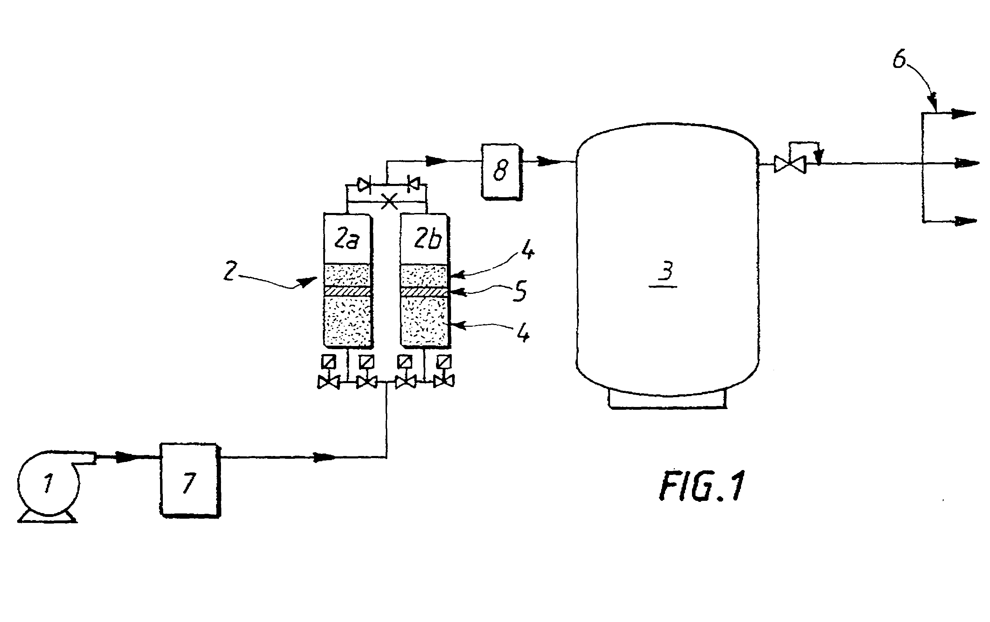

Les essais de mise en oeuvre du procédé de l'invention donnés ci-après à titre d'exemples ont été réalisés à l'aide de l'installation décrite sur la figure 1.

Cette figure 1 représente une installation de préparation d'air médical, laquelle comprend une source de compression d'air atmosphérique, ici un compresseur à vis 1, délivrant de l'air atmosphérique comprimé à une pression de l'ordre 8.10⁵ Pa à 13.10⁵ Pa.

L'air ainsi comprimé est acheminé jusqu'à une zone d'épuration 2, laquelle comporte deux adsorbeurs 2a, 2b contenant chacun un lit d'adsorbant de type alumine activée 4, 4', au sein duquel est inséré (aux 2/3) un lit d'un catalyseur d'oxydation de type hopcalite 5.

L'air comprimé est donc épuré en passant successivement à travers la première partie 4 du lit d'adsorbant de type alumine activée, puis du lit de catalyseur d'oxydation de type hopcalite 5, et enfin à travers la deuxième partie 4' du lit d'adsorbant de type d'alumine activée.

Les deux adsorbeurs 2a et 2b fonctionnent de manière alternée, c'est-à-dire que lorsque l'adsorbeur 2a est en phase de production, c'est-à-dire d'épuration d'air, l'adsorbeur 2b est en phase de régénération, et réciproquement.

En sortie d'adsorbeur 2a ou 2b, l'air médical est récupéré puis acheminé vers une capacité tampon 3 puis/ou vers un ou plusieurs sites utilisateurs (non représentés), par exemple par l'intermédiaire d'un réseau de canalisation de gaz 6 situé à l'intérieur d'un bâtiment hospitalier.

Il est souhaitable d'aménager entre le compresseur 1 et la zone d'épuration 2 un ou plusieurs filtres 7 destinés notamment à éliminer les poussières contenues dans l'air atmosphérique et/ou une partie de l'huile issue du compresseur.

De même, de par les variations de pression s'exerçant à l'intérieur des adsorbeurs 2a et 2b, il se produit une attrition des matériaux qui s'y trouvent, d'où il résulte des poussières, qu'il est souhaitable d'éliminer en plaçant un ou plusieurs filtres 8 entre les adsorbeurs 2a et 2b et la capacité tampon 3.

Les exemples ci-après ont été réalisés en utilisant les matériaux suivants:
- alumine activée commercialisé par la société Alcoa, sous la référence F200 (7x14), laquelle a une granulométrie comprise entre 1,2 et 2,5 mm;
- hopcalite commercialisée par la société Dräger, sous la référence "PARAT", de densité apparente 900 kg/m³, et de granulométrie de 1 à 2,5 mm.
- zéolite de type 13X, commercialisée par la société UOP sous la référence 13X APGB et de granulométrie de 1,6 à 2,6 mm.

### Exemple I: Elimination du CO₂.

Les essais 1 et 2 ont été réalisés afin de montrer l'efficacité de l'épuration de l'air atmosphérique en son impureté CO₂, par passage sur un lit (19,7 kg) constitué d'un adsorbant de type alumine activée.

L'essai n° 1 est réalisé à l'aide d'air atmosphérique et l'essai n° 2 à l'aide d'air atmosphérique artificiellement pollué par injection de CO₂.

Les teneurs en CO₂ sont mesurées à l'aide d'un analyseur infra-rouge de type UNOR 6N (seuil de détection 0,2 ppm) commercialisé par la société MAHIAK.

Les résultats obtenus sont consignés dans le Tableau II suivant:

**TABLEAU II**

| ESSAI N° | TENEUR EN CO₂ DE L'AIR EN ENTREE (AIR IMPUR) | TENEUR EN CO₂ DE L'AIR EN SORTIE (AIR PURIFIE) | TAUX DE PURIFICATION |
|---|---|---|---|
| 1 | 380 ppm | 77 ppm | 80% |
| 2 | 940 ppm | 197 ppm | 79% |

Il ressort du Tableau II que le taux de purification de l'air en son impureté est sensiblement constant (≃ 80%) quelle que soit la teneur en CO₂ de l'air à purifier: teneur normale (380 ppm) ou teneur anormalement élevée (940 ppm). Dans tous les cas, l'air purifié obtenu contient une teneur de CO₂ inférieure à 350 ppm, donc conforme aux spécifications de l'air médical.

L'alumine activée permet donc une élimination efficace de l'impureté CO₂ contenue dans l'air atmosphérique.

### Exemple II: Essai comparatif alumine activée/zéolite.

Afin de pouvoir comparer les performances de la zéolite (13X) et de l'alumine activée en ce qui concerne l'épuration de l'air en son impureté CO2, un essai supplémentaire (essai 3) a été réalisé. Cet essai 3 est analogue à l'essai 1 (exemple I) à l'exception du fait qu'une partie de la charge d'alumine activée a été remplacée par une charge équivalente (en poids) de zéolite 13X. Plus précisément, le lit d'adsorbant selon l'essai 3 est constitué de 5,6 kg d'alumine activée et de 14,1 kg de zéolite 13X; les résultats obtenus sont consignés dans le Tableau III suivant.

**TABLEAU III**

| ESSAI N° | TENEUR EN CO₂ DE L'AIR EN ENTREE (AIR IMPUR) | TENEUR EN CO₂ DE L'AIR EN SORTIE (AIR PURIFIE) | TAUX DE PURIFICATION |
|---|---|---|---|
| 1 (cf. exemple I) | 380 ppm | 77 ppm | 80% |
| 3 | 380 ppm | 125 ppm | 67% |

Il ressort clairement du Tableau III que, toutes conditions égales par ailleurs, un lit d'adsorbant constitué exclusivement d'alumine activée permet d'améliorer de près de 20% le taux de purification de l'air en son impureté CO₂, par rapport à un lit comprenant de la zéolite 13X, en plus de l'alumine activée, ce qui confirme la supériorité de l'alumine activée sur la zéolite.

### Exemple III: Elimination des pics d'oxygène.

Afin de vérifier que l'alumine activée n'est pas à l'origine d'augmentations inadmissibles de la teneur en oxygène de l'air médical ou "pics d'oxygène", contrairement aux zéolites (zéolite 13X par exemple) en début de phase d'épuration, donc après régénération de l'adsorbant, les essais comparatifs suivants ont été réalisées.

De l'air atmosphérique a été mis en contact, dans les mêmes conditions, de pression et de température (12.10⁵ Pa, 40°C), avec un lit d'adsorbant constitué soit d'alumine activée, soit d'une proportion équivalente de zéolite 13X; dans tous les cas, l'adsorbant avait été régénéré au préalable.

La teneur en oxygène de l'air après passage sur le lit d'adsorbant est mesurée à l'aide d'un analyseur du type OA570 commercialisé par la société SERVOMEX.

Les résultats de ces mesures ont été représentés sur la figure 2. Il apparaît immédiatement que lorsque l'air est épuré sur un adsorbant de type zéolite 13X (courbe 13X) , il se produit un "pic d'oxygène" en début d'épuration (pendant environ 30 secondes) aboutissant à de l'air produit ayant une teneur en oxygène pouvant atteindre 25%, ce qui est inacceptable pour de l'air médical.

Au contraire, lorsque l'adsorbant est constitué uniquement d'alumine activée (courbe AA), on constate que l'enrichissement en oxygène est très faible et que la teneur en oxygène est toujours inférieure à 20,5%, ce qui correspond tout à fait aux exigences de l'air médical.

L'alumine activée contribue donc effectivement à l'élimination des "pics d'oxygène" se produisant en début de phase d'épuration.

### Exemple IV: Odeur d'huile.

L'air médical est principalement destiné à être administré par voie orale ou nasale à des patients. De là, il est indispensable que cet air médical soit exempt de toute odeur désagréable d'huile, laquelle huile est inévitablement libérée lors du fonctionnement du compresseur. L'incorporation de filtres coalescents en aval dudit compresseur permet de réduire fortement la teneur en huile, de l'air comprimé, mais sans toutefois permettre de faire descendre cette concentration en huile sous le seuil de détection olfactive situé à une concentration d'environ 0,2 mg/Nm³ d'air.

De façon surprenante, il a été constaté expérimentalement que l'alumine activée permettait de retenir une partie au moins de l'huile compris dans l'air comprimé.

En effet, de l'air comprimé ayant une forte odeur d'huile (concentration en huile > 0,2 mg/Nm³) se trouve totalement dépourvu de toute odeur (concentration en huile < 0,2 mg/Nm³) après passage de celui-ci sur un lit d'alumine activée.

L'air ainsi épuré et désodorisé est utilisable à des fins médicales.

### Exemple V: Elimination des NOₓ et CO.

Les essais 4 à 7 ci-après visent à montrer l'efficacité du procédé de l'invention dans l'épuration de l'air en ses impuretés CO et NOₓ (principalement NO et NO₂). Plus précisément, de l'air comprimé contenant des quantités données d'impuretés NOₓ et CO a été mis au contact (débit 100 Nm³/h) :
- essai 4: uniquement d'un lit d'adsorbant constitué exclusivement d'alumine activée (13 kg);
- essais 5 et 6: successivement d'un lit d'adsorbant constitué exclusivement d'alumine activée (13 kg) puis d'un lit de catalyseur d'oxydation de type hopcalite (1,3 kg). L'air traverse donc successivement le lit d'alumine activée puis le lit d'hopcalite.
- essai 7: d'un lit d'adsorbant constitué exclusivement d'alumine activée (13 kg) au sein duquel a été inséré un lit de catalyseur d'oxydation de type hopcalite (1,3 kg). L'air traverse donc successivement un premier lit d'alumine activée; puis un lit d'hopcalite et enfin un deuxième lit d'alumine activée.

Les teneurs en NOₓ et en CO contenues dans l'air sont mesurées avant épuration (c'est-à-dire en entrée) et après passage sur le ou les lits d'adsorbant et/ou catalyseur (c'est-à-dire en sortie). Les analyseurs utilisés pour effectuer ces mesures sont par exemples:
- pour les NOₓ (NO et NO₂): l'analyseur infrarouge de type TOPAZE 2020 commercialisé par la société COSMA (seuil de détection: environ 0,3 ppm);
- pour le CO: l'analyseur de type UNOR 6N (cf. Exemple 1).

Les résultats obtenus sont corrigés dans les Tableaux IV et VII ci-après.

**TABLEAU IV**

| ESSAI N° | IMPURETE | TENEUR MESUREE EN ENTREE | TENEUR MESUREE EN SORTIE |
|---|---|---|---|
| 4 | NO | 2,9 ppm | 2,9 ppm (après 4 mn) |
| | CO | 28 ppm | 28 ppm (après 4 mn) |
| 5 | NOₓ | 6,7 ppm | < 10 ppb (après 18 h) |
| | CO | 27 ppm | N. D. (après 18 h) |
| 6 | CO | 127 ppm | 1,7 ppm (après 18 h) |
| N. D.: non détecté (donc < 200 ppb). | | | |

L'essai 4 met clairement en évidence que l'alumine activée ne permet pas d'arrêter NO et le CO, étant donné qu'après seulement 4 minutes d'épuration, les teneurs en NO et CO en aval (en sortie) du lit d'alumine activée sont égales à celles en amont de celui-ci (en entrée).

Par contre, il ressort des essais 5 et 6 que la présence d'un lit d'hopcalite en aval du lit d'alumine activée permet d'assurer des teneurs basses en NOₓ et CO, c'est-à-dire inférieures aux seuils acceptables du point de vue médical (cf. Tableau I) et ce, de façon durable (ici pendant 18 heures) et pour de fortes concentrations en ces impuretés (127 ppm de CO).

Une mesure complémentaire (essai 5) effectuée en aval du lit d'hopcalite a mis en évidence la présence d'une teneur en CO₂ d'approximativement 27 ppm, ce qui tend à conclure à l'oxydation du CO en CO₂ sur l'hopcalite (le CO₂ n'est pas retenu par ce matériau).

Cependant, comme le montre l'Exemple I ci-dessus, l'alumine activée présente une bonne affinité pour le CO₂. De là, l'insertion du lit d'hopcalite au sein du lit d'alumine activée ou l'insertion d'un deuxième lit d'alumine activée en aval du lit d'hopcalite permet de retenir ce CO₂ formé par oxydation du CO sur l'hopcalite. Ceci a été validé par l'essai 7 résumé dans le Tableau V ci-après.

**TABLEAU V**

| ESSAI N° 7 | TENEUR EN ENTREE | TENEUR EN AVAL DU LIT D'HOPCALITE | TENEUR EN AVAL DU DEUXIEME LIT D'ALUMINE ACTIVEE |
|---|---|---|---|
| CO | 27 ppm | N. D. | N. D. |
| CO₂ | 0 ppm | 27 ppm | N. D. |
| N. D.: non détectée. | | | |

Il ressort clairement du Tableau V que le CO₂ obtenu par conversion oxydative du CO sur hopcalite peut être piégé efficacement sur un deuxième lit d'alumine activée placé en aval du lit d'hopcalite.

En ce qui concerne les NOₓ (principalement NO et NO₂), ceux-ci ne sont pas détectés en aval du lit d'hopcalite. Il est donc vraisemblable de conclure que ceux-ci s'adsorbent sur ce matériau; le NO étant soit adsorbé sous forme NO, soit sous forme NO₂ après conversion catalytique.

### Exemple VI: Elimination du SO₂.

L'essai n°8 ci-après, analogue aux essais précédents, a été effectué afin de montrer l'efficacité du procédé de l'invention dans l'épuration de l'air en son impureté SO₂.

Cet essai n°8 a été réalisé sur de l'air artificiellement pollué par injection, en continu, de 10 ppm de SO₂.

Les teneurs en SO₂, données dans le tableau VI ci-après, sont mesurées au moyen d'un analyseur par fluorescence U.V. tel celui commercialisé par la Société ENVIRONNEMENT S. A. sous la référence AF20M (seuil de détection environ 2 ppb).

**TABLEAU VI**

| ESSAI N° | TENEUR EN SO₂ DE L'AIR EN ENTREE | TENEUR EN SO₂ DE L'AIR EN SORTIE |
|---|---|---|
| 8 | 10 ppm | < 6 ppb |

Le tableau VI montre clairement que la mise en oeuvre du procédé de l'invention permet d'assurer une épuration de l'air en son impureté SO₂ jusqu'à un seuil conforme aux spécifications de l'air de qualité médicale ; une teneur de l'air en SO₂ intérieure à 6 ppb ayant été mesurée en sortie de la zone de purification.

### Exemple VII: Régénération de la zone d'adsorption.

La régénération de la zone d'adsorption est réalisée préférentiellement à une pression d'environ 10⁵ Pa et à la température ambiante.

De manière habituelle, dans une installation mettant en oeuvre 2 adsorbeurs, l'un des adsorbeurs est en phase d'épuration, c'est-à-dire en phase de production d'air médical, pendant que l'autre adsorbeur est en phase de régénération. La régénération de l'adsorbeur peut être effectuée, de façon connue, avec une partie (par exemple 20% du débit) de l'air de qualité médicale produit par l'adsorbeur qui se trouver en phase de production.

## Revendications

1. Procédé de préparation d'air médical à partir d'air atmosphérique comportant au moins les étapes de :
a) compression de l'air atmosphérique à une pression supérieure à la pression atmosphérique,
b) purification de l'air comprimé en l'une au moins des impuretés qu'il contient, par introduction dudit air comprimé dans une zone d'épuration comprenant au moins un adsorbeur contenant au moins un matériau adsorbant et au moins un catalyseur d'oxydation,
c) régénération dudit au moins un adsorbeur, caractérisé en ce que le matériau adsorbant est de type alumine activée et le catalyseur d'oxydation est de type hopcalite.

2. Procédé selon la revendication 1, caractérisé en ce qu'un lit d'hopcalite est inséré au sein d'un lit d'alumine activée.

3. Procédé selon l'une des revendications 1 ou 2, caractérisé en ce que le lit d'hopcalite est inséré dans la deuxième moitié du lit d'alumine activée, de préférence dans le dernier tiers.

4. Procédé selon l'une des revendications 1 à 3, caractérisé en ce que le rapport de l'épaisseur du lit d'hopcalite à l'épaisseur du lit d'alumine activée est compris dans la gamme 1 : 3 à 1 : 70 et, de préférence, dans la gamme 1 : 6 à 1 : 50.

5. Procédé selon l'une des revendications 1 à 4, caractérisé en ce que la purification de l'air est effectuée à une pression comprise entre 3.10⁵ Pa et 15.10⁵ Pa, de préférence entre 8.10⁵ Pa et 13.10⁵ Pa.

6. Procédé selon l'une des revendications 1 à 5, caractérisé en ce que le rapport du poids d'alumine activée au poids d'hopcalite est compris dans la gamme 2,5 : 1 à 60 : 1 et, de préférence,dans la gamme 10 : 1 à 30 : 1.

7. Procédé selon l'une des revendications 1 à 6, caractérisé en ce que les particules d'hopcalite ou d'alumine activée ont un diamètre moyen compris dans la gamme 0,5 à 4 mm, de préférence dans la gamme 1 à 2,5 mm.

8. Procédé selon l'une des revendications 1 à 7, caractérisé en ce que la zone d'épuration comprend deux adsorbeurs contenant chacun au moins un lit d'un matériau adsorbant et au moins un lit d'un catalyseur d'oxydation.

9. Procédé selon la revendication 8, caractérisé en ce que lorsque l'un desdits adsorbeurs est en phase d'épuration, l'autre adsorbeur est en phase de régénération.

10. Procédé selon l'une des revendications 1 à 3, caractérisé en ce que l'air médical produit est récupéré et délivré à au moins un site utilisateur ou à une capacité de stockage situé à l'intérieur ou à l'extérieur d'un bâtiment hospitalier.

11. Installation de préparation d'air médical pour la mise en oeuvre du procédé selon l'une des revendications 1 à 10, comprenant:
- des moyens de compression d'air (1) délivrant de l'air atmosphérique à une pression supérieure à la pression atmosphérique;
- des moyens d'épuration (2) de l'air comprimé comportant au moins deux adsorbeurs (2a, 2b) contenant chacun au moins un lit d'un matériau adsorbant (4, 4') de type alumine activée et au moins un lit d'un catalyseur d'oxydation (5) de type hopcalite;
- des moyens de stockage (3) contenant de l'air médical et reliés à un ou plusieurs sites utilisateur (6).
